Europäisches Patentamt

European Patent Office

Office européen des brevets

(19)

(11) Publication number: **0 256 704 B1**

(12) **EUROPEAN PATENT SPECIFICATION**

(45) Date of publication of patent specification: **22.04.92** (51) Int. Cl.⁵: **G02B 6/44**

(21) Application number: **87306685.6**

(22) Date of filing: **29.07.87**

(54) **Optical cables.**

(30) Priority: **07.08.86 GB 8619308**

(43) Date of publication of application:
**24.02.88 Bulletin 88/08**

(45) Publication of the grant of the patent:
**22.04.92 Bulletin 92/17**

(84) Designated Contracting States:
**AT BE CH DE ES FR IT LI LU NL SE**

(56) References cited:
**EP-A- 0 060 180**          **DE-A- 3 024 310**
**DE-A- 3 424 808**          **GB-A- 2 021 282**
**GB-A- 2 064 163**          **US-A- 4 230 395**

(73) Proprietor: **Telephone Cables Limited
Chequers Lane
Dagenham Essex RM9 6OA(GB)**

(72) Inventor: **Peacock, Alan James
2 Hilary Close
Hornchurch Essex(GB)**

(74) Representative: **Kirby, Harold Victor Albert
The General Electric Company, p.l.c. GEC
Patent Department Wembley Office Hirst Re-
search Centre East Lane
Wembley Middlesex HA9 7PP(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 256 704 B1

## Description

This invention relates to optical cables, and especially to such cables of the kind known as aerial cables which are designed to be freely suspended from spaced supports which may be up to 1000 metres apart.

It is desirable for such aerial cables to be relatively light in weight, to reduce loading when so suspended.

It has been proposed to incorporate optical fibres in overhead conductors, for example as in GB-A-2064163, the fibres in such a case being accommodated in tubes within a polyethylene sheath containing strength members, and the sheath being surrounded by layers of helically wound conductor wires. The conductor wires, in addition to carrying electrical current serve as a protective covering for the optical fibre unit and also provide a substantial degree of tensile strength.

It is also known from EP 0060180 to locate optical fibres in the interstitial spaces between adjacent generally metallic strength members and a surrounding sheath, in order to provide protection of the fibres against high pressures, but in such a case there is a risk of the fibres being entrapped between the respective strength members. This document does not however suggest that similar construction could be used to provide a completely metal-free aerial cable.

According to the present invention an optical aerial cable comprises a cylindrical outer sheath, at least three longitudinally extending cylindrical strength members accommodated within and forming interstitial spaces with said outer sheath, with each strength member bearing against only two other strength members and against the inner surface of said outer sheath, and a plurality of optical fibres accommodated in an interstitial space between adjacent strength members, characterised in that said plurality of optical fibres in a said interstitial space are loosely accommodated in a protective tube to form an optical fibre package, the strength members, the outer sheath and the protective tube are of non-metallic material, and the radius of the optical fibre package is substantially smaller than that of the strength members such that part of the interstitial space separates the package from the inner surface of the outer sheath.

Preferably the tube containing the fibres is filled with a water blocking substance such as grease. A water blocking substance may also be incorporated in the interstices between adjacent strength members, and between the strength members and the outer sheath.

The strength members must, of course, provide an adequate resistance to stretching of the cable to prevent an undue stress being applied to the fibres when the cable is suspended between two supports spaced apart the maxiumum distance for which the cable is designed to be used.

Moreover it is particularly desirable for aerial cables to have the minimum overall diameter for a given total cross-sectional area of the strength members, but at the same time there should be adequate interstitial space for the optical fibre package or packages.

We have found that with strength members of circular cross-section this is conveniently achieved with four or five strength members, these preferably being formed of glass reinforced plastic or other suitable high modulus material stranded together in a helical configuration.

In the case of an aerial cable incorporating four circular-sectioned strength members, optical fibre packages are conveniently stranded around the strength members in the interstitial channels formed between adjacent members and the inner surface of the surrounding sheath, the depth of the channels being such that the optical fibre packages are spaced from the inner surface of the sheath. This protects the fibres against external pressure during installation and use of the cable.

The strength members may, for example have a diameter of about 5 millimetres, this permitting a tube of approximately 2 millimetres external diameter, and containing, say, four optical fibres, to be accommodated in the said interstitial channels without contacting the inner surface of the sheath. A cushioning member may be provided in the central channel between the four stranded strength members in such a case.

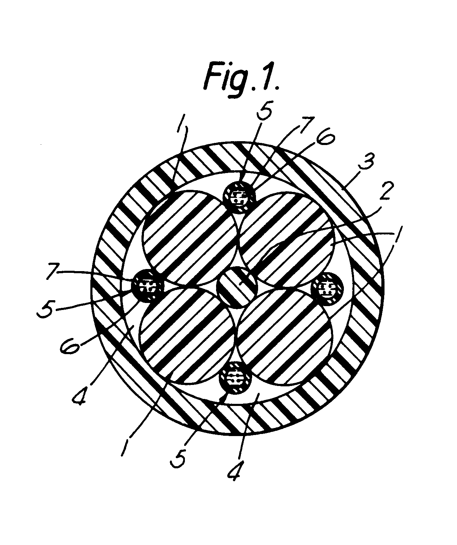

One form of aerial cable in accordance with the invention will now be described by way of example with reference to the accompanying drawing, which represents a transverse section through the cable.

The cable comprises four circular-sectioned strength members 1 of glass-reinforced plastics material, each having a diameter of approximately 5mm stranded together around a central filler 2 of polyethylene having a diameter of approximately 2mm, and surrounded by a close fitting polyethylene or other polymer sheath 3 having a wall thickness of approximately 1.5mm.

Within the four channels 4 formed between adjacent pairs of strength members 1 there are located four optical fibre elements 5, each of which comprises a bundle of four single mode optical fibres 6 within a 2mm diameter tube 7 of a suitable polymer having a filling of grease or other water blocking compound which allows a degree of transverse movement of the fibres within the tube. The depth of the channel 4 is such that the optical fibre elements 5 are spaced from the inner surface of the surrounding sheath 3, and thereby protected against external pressure.

The interstitial spaces between the strength members 1, optical fibre elements 5 and the sheath 3 may also be filled with a suitable water-blocking compound to prevent water penetration along the cable.

The sheath may contain a suitable filler to provide an adequate level of resistivity.

The strength members may, in some cases, be coated with a plastics material to give added mechanical and/or environmental protection.

## Claims

1. An optical aerial cable comprising a cylindrical outer sheath (3), at least three longitudinally extending cylindrical strength members (1) accommodated within and forming interstitial spaces with said outer sheath, with each strength member bearing against only two other strength members and against the inner surface of said outer sheath, and a plurality of optical fibres (6) accommodated in an interstitial space (4) between adjacent strength members, characterised in that said plurality of optical fibres (6) in a said interstitial space are loosely accommodated in a protective tube (7) to form an optical fibre package (5), the strength members (1), the outer sheath (3) and the protective tube (7) are of non-metallic material, and the radius of the optical fibre package is substantially smaller than that of the strength members such that part of the interstitial space separates the package from the inner surface of the outer sheath.

2. An optical cable according to Claim 1 characterised in that each tube (7) is filled with a water blocking substance.

3. An optical cable according to Claim 1 or 2 characterised in that a water blocking substance is incorporated in the interstitital spaces between adjacent strength members (1), and between the strength members (1) and the outer sheath (3).

4. An optical cable according to Claim 2 or 3 characterised in that the water blocking substance is a grease substantially filling the tube (7).

5. An optical cable according to any preceding claim characterised in that it has four or five strength members (1) of circular cross-section.

6. An optical cable according to any preceding claim characterised in that the strength members (1) are formed of a glass reinforced plastics material stranded together in a helical configuration.

7. An optical cable according to Claim 6 characterised in that it has four circular-sectioned strength members (1), incorporating a plurality of said optical fibre packages (6) stranded around the strength members (1) in the interstitial channels formed between adjacent members (1) and the inner surface of the surrounding sheath (3).

8. An optical cable according to Claim 8 characterised in that the strength members (1) surround a cushioning member (2).

## Revendications

1. Câble optique aérien comprenant une gaine cylindrique externe (3), au moins trois organes longitudinaux et cylindriques (1) de renforcement, logés dans la gaine externe et formant des espaces interstitiels avec la gaine externe, chaque organe de renforcement étant en appui contre deux organes de renforcement seulement et contre la surface interne de la gaine externe, et plusieurs fibres optiques (6) logées dans un espace interstitiel (4) délimité entre les organes adjacents de renforcement, caractérisé en ce que les fibres optiques (6) de l'espace interstitiel sont logées avec du jeu dans un tube protecteur (7) destiné à former un ensemble (5) à fibres optiques, les organes (1) de renforcement, la gaine externe (3) et le tube protecteur (7) sont formés d'un matériau non métallique, et le rayon de l'ensemble à fibres optiques est nettement inférieur à celui des organes de renforcement afin qu'une partie de l'espace interstitiel sépare l'ensemble à fibres optiques de la surface interne de la gaine externe.

2. Câble optique selon la revendication 1, caractérisé en ce que chaque tube (7) est rempli d'une substance arrêtant l'eau.

3. Câble optique selon la revendication 1 ou 2, caractérisé en ce qu'une substance arrêtant l'eau est incorporée aux espaces interstitiels entre les organes adjacents (1) de renforcement et entre les organes (1) de renforcement et la gaine externe (3).

4. Câble optique selon la revendication 2 ou 3, caractérisé en ce que la substance arrêtant l'eau est une graisse qui remplit pratiquement le tube (7).

5. Câble optique selon l'une quelconque des revendications précédentes, caractérisé en ce qu'il comporte quatre ou cinq organes (1) de renforcement de section circulaire.

6. Câble optique selon l'une quelconque des revendications précédentes, caractérisé en ce que les organes de renforcement (1) sont formés de matière plastique armée de verre, et sont retordus en hélice.

7. Câble optique selon la revendication 6, caractérisé en ce qu'il possède quatre organes (1) de renforcement de section circulaire, comprenant plusieurs ensembles (6) à fibres optiques, retordus autour des organes (1) de renforcement logés dans les canaux interstitiels formés entre les organes adjacents (1) et la surface interne de la gaine (3) placée autour d'eux.

8. Câble optique selon la revendication 7, caractérisé en ce que les organes (1) de renforcement entourent un organe d'amortissement (2).

**Patentansprüche**

1. Optisches Luftkabel, aufweisend eine zylindrische äußere Hülle (3), zumindest drei sich in Längsrichtung erstreckende zylindrische Verstärkungsteile (1), die innerhalb der äußeren Hülle aufgenommen sind und mit dieser Zwischenräume bilden, wobei jedes Verstärkungsteil nur an zwei weiteren Verstärkungsteilen und der Innenfläche der äußeren Hülle angreift, und mehrere Lichtleitfasern (6), die in einem Zwischenraum (4) zwischen aneinandergrenzenden Verstärkungsteilen aufgenommen sind,
**dadurch gekennzeichnet,**
daß mehrere Lichtleitfasern (6) in diesen Zwischenraum zur Ausbildung eines Lichtleitfaserpakets (5) lose in einer Schutzhülse (7) aufgenommen sind, die Verstärkungsteile (1), die äußere Hülle (3) und die Schutzhülse (7) aus nichtmetallischem Material bestehen und der Radius des Lichtleitfaserpakets wesentlich geringer als der der Verstärkungsteile ist, derart, daß ein Teil des Zwischenraums das Paket von der Innenfläche der äußeren Hülle trennt.

2. Optisches Kabel nach Anspruch 1,
**dadurch gekennzeichnet,**
daß jede Hülse (7) mit einer wasserblockierenden Substanz gefüllt ist.

3. Optisches Kabel nach Anspruch 1 oder 2,
**dadurch gekennzeichnet,**
daß eine wasserblockierende Substanz in den Zwischenräumen zwischen aneinandergrenzenden Verstärkungsteilen (1) und zwischen den Verstärkungsteilen (1) und der äußeren Hülle (3) aufgenommen ist.

4. Optisches Kabel nach Anspruch 2 oder 3,
**dadurch gekennzeichnet,**
daß die wasserblockierende Substanz ein Fett ist, das die Hülse (7) im wesentlichen füllt.

5. Optisches Kabel nach einem vorhergehenden Anspruch,
**dadurch gekennzeichnet,**
daß es vier oder fünf Verstärkungsteile (1) von kreisförmigem Querschnitt aufweist.

6. Optisches Kabel nach einem vorhergehenden Anspruch,
**dadurch gekennzeichnet,**
daß die Verstärkungsteile (1) aus einem glasfaserverstärkten Kunststoffmaterial, miteinander in einer spiralförmigen Konfiguration verseilt, ausgebildet sind.

7. Optisches Kabel nach Anspruch 6,
**dadurch gekennzeichnet,**
daß es vier kreisquerschnittsförmige Verstärkungsteile (1) aufweist, wobei mehrere dieser Lichtleitfaserpakete (6) um die Verstärkungsteile (1) in den Zwischenraumkanälen verseilt einbezogen sind, die zwischen aneinandergrenzenden Teilen (1) und der Innenfläche der umgebenden Hülse (3) ausgebildet sind.

8. Optisches Kabel nach Anspruch 7,
**dadurch gekennzeichnet,**
daß die Verstärkungsteile (1) ein Dämpfungsteil (2) umgeben.

Fig.1.